# EUROPEAN PATENT SPECIFICATION

(11) **EP 4 030 393 B1**
(45) Date of publication and mention of the grant of the patent: **20.12.2023**
(21) Application number: 22164114.5
(22) Date of filing: 24.03.2022
(51) Int. Cl.: G06V 20/56, B60W 40/06, G01C 21/00

(54) **METHOD AND APPARATUS FOR DETECTING BUMPY REGION OF ROAD SURFACE, ELECTRONIC DEVICE, STORAGE MEDIUM, COMPUTER PROGRAM PRODUCT, AND VEHICLE**
VERFAHREN UND VORRICHTUNG ZUR ERKENNUNG VON FAHRBAHNUNEBENHEITEN, ELEKTRONISCHE VORRICHTUNG, SPEICHERMEDIUM, COMPUTERPROGRAMMPRODUKT UND FAHRZEUG
PROCÉDÉ ET APPAREIL DE DÉTECTION DE RÉGION CAHOTEUSE DE LA SURFACE D'UNE ROUTE, DISPOSITIF ÉLECTRONIQUE, SUPPORT DE STOCKAGE, PRODUIT PROGRAMME INFORMATIQUE ET VÉHICULE

(30) Priority: 17.06.2021 CN 202110671500
(43) Date of publication of application: 20.07.2022
(73) Proprietor: Apollo Intelligent Connectivity (Beijing) Technology Co., Ltd., Beijing 100176 (CN)
(72) Inventor: XING, Liang, BEIJING, 100176 (CN); SONG, Shuqing, BEIJING, 100176 (CN); WU, Yi, BEIJING, 100176 (CN); YANG, Wentao, BEIJING, 100176 (CN); ZHAO, Shuaishuai, BEIJING, 100176 (CN); LUO, Qionghua, BEIJING, 100176 (CN); WANG, Lifeng, BEIJING, 100176 (CN); FENG, Yunchan, BEIJING, 100176 (CN); WANG, Tao, BEIJING, 100176 (CN); CAO, Xiaochen, BEIJING, 100176 (CN); WU, Fuchuang, BEIJING, 100176 (CN)
(74) Representative: Regimbeau

(56) References cited:
- DE-A1-102014 214 729
- DE-A1-102015 205 210
- DE-A1-102019 119 168
- US-A1- 2021 012 131

## Description

### TECHNICAL FIELD

The invention relates to the field of computer technology, and in particular, to the field of data processing.

### BACKGROUND

Speeds of a vehicle on different road sections may be different in a process of driving on a road surface. In a case where there is a pothole or bulge on the road surface where the vehicle drives, bumps may be caused if the vehicle does not slow down in time, which may affect ride comfort, and even cause a safety accident in severe cases. Therefore, it is necessary to detect a location of the bumpy region of the road surface, to remind other vehicles passing through the road section to slow down or to remind road maintenance personnel to carry out road maintenance in time.

In the prior art, the image of a road surface is usually collected through a camera, to roughly locate the bumpy region of the road surface. However, the location of the bumpy region of the road surface obtained in this way is not precise enough to effectively remind other vehicles to avoid bumps.

DE102014214729A1 relates to a method for creating a digital map as a basis for a driver assistance system, which is set up to assist a driver in dealing with road damage, comprising: - Detection of road damage on a road with a vehicle; - detecting a position of the vehicle when the road damage is detected; and - Enter a map information into the digital map in which the detected road damage is assigned to the detected position.

US2021/012131A1 discloses that a system for correcting road surface information related to an Electronic Control Suspension (ECS), may include a camera recognition information storage configured of securing camera recognition information related to a forward obstacle which is recognized through a navigation device and a camera; a sensor recognition information calculator configured of determining sensor recognition information related to the obstacle by receiving detecting values through vehicle behavior sensors; and a camera recognition information corrector configured of correcting the camera recognition information when a difference is generated between the camera recognition information and the sensor recognition information.

DE102015205210A1 discloses a system for predictive suspension control for an off-road commercial vehicle, with a wheel spring device controllable with respect to damping and/or suspension characteristics, a sensor device for determining the course of force a fault acting on the wheel spring device due to a condition of a ground surface to be traversed, a navigation device for determining a current geoposition of the off-road commercial vehicle in the form of associated position data, as well as a storage unit, in which a control unit stores the force curve determined due to the fault or a quantity derived therefrom, including the corresponding position data, as an associated data pair, where the control unit detects an imminent re-crossing of the fault by continuously comparing the current geo-position of the off-road commercial vehicle with the stored position data and the damping and/or suspension characteristics based on the stored force profile or the derived quantity by pre-controlling the Wheel spring device adapts such that an effect of the fault on the wheel spring device is at least partially compensated.

### SUMMARY

The invention is defined by the appended independent claims.

The technical solution of the invention solves a problem that accuracy of locating the bumpy region of the road surface is not high. According to the method for detecting a bumpy region of a road surface in the technical solution of the invention, in a case where the vehicle passes through the bumpy region of the road surface, the location of the bumpy region of the road surface is determined by using the driving state data and the orientation of the vehicle, and the bumpy region of the road surface can be accurately located, thereby effectively reminding other vehicles to take measures in time and reminding road maintenance personnel to carry out road maintenance in time.

It should be understood that the content described in this section is neither intended to limit the key or important features of the embodiments of the invention, nor intended to limit the scope of the invention, as defined by the appended independent claims. Other features of the invention will be readily understood through the following description.

### BRIEF DESCRIPTION OF THE DRAWINGS

The drawings are used to better understand the solution and do not constitute a limitation to the invention. In which:
FIG. 1 is a schematic diagram of a method for detecting a bumpy region of a road surface according to an embodiment of the invention;
FIG. 2 is a schematic diagram where a vehicle detects that the vehicle runs over a pothole according to an embodiment of the invention;
FIG. 3 is a schematic diagram where a pothole is in the field of view of a camera according to an embodiment of the invention;
FIG. 4 is an image of a bumpy region of a road surface according to an embodiment of the invention;
FIG. 5 is a schematic diagram where an orientation of a vehicle is opposite to an orientation of a camera according to an embodiment of the invention;
FIG. 6 is a schematic diagram of a method for detecting a bumpy region of a road surface according to an embodiment of the invention;
FIG. 7 is a schematic diagram of an apparatus for detecting a bumpy region of a road surface according to an embodiment of the invention;
FIG. 8 is a schematic diagram of a second determination module according to an embodiment of the invention; and
FIG. 9 is a block diagram of an electronic device for implementing a method for detecting a bumpy region of a road surface according to an embodiment of the invention.

### DETAILED DESCRIPTION

Exemplary embodiments of the invention are described below in combination with the drawings, including various details of the embodiments of the invention to facilitate understanding, which should be considered as exemplary only. Thus, those of ordinary skill in the art should realize that various changes and modifications can be made to the embodiments described here without departing from the scope of the invention as defined by the appended independent claims. Likewise, descriptions of well-known functions and structures are omitted in the following description for clarity and conciseness.

The technical solutions of the invention may be applied to application scenarios such as a human-driven vehicle, an autonomous vehicle and the like. In a case where the vehicle passes through a bumpy region of a road surface, the bumpy region of the road surface may be accurately located by using driving state data and an orientation of the vehicle during a driving process, to remind drivers of other vehicles or autonomous vehicles to slow down or take other measures in time, as well as to remind road maintenance personnel to repair and maintain the road surface in time.

An execution subject of the invention may be any one of electronic devices, for example, a vehicle and a terminal device such as a vehicle-mounted terminal. The method for detecting a bumpy region of a road surface in the embodiments of the invention will be described in detail below.

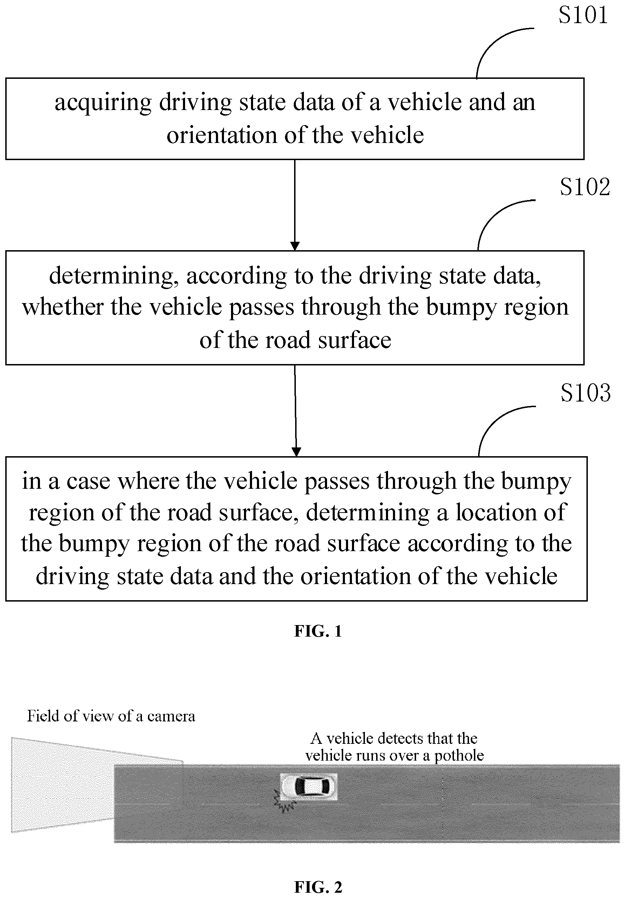

FIG. 1 is a schematic diagram of a method for detecting a bumpy region of a road surface according to an embodiment of the invention. As shown in FIG. 1, the method for detecting a bumpy region of a road surface can include:
S101, acquiring driving state data of a vehicle and an orientation of the vehicle;

In a process that a vehicle drives on a road, the state data related to the driving of the vehicle can be acquired through a terminal device such as a vehicle-mounted terminal, and the state data includes but is not limited to a speed, an acceleration, an attitude angle, and a location of the vehicle. In addition, an orientation of the vehicle can also be obtained, namely, a direction corresponding to the front of the vehicle.

S102, determining, according to the driving state data, whether the vehicle passes through the bumpy region of the road surface; and

A state change of the vehicle during driving can be determined according to the driving state data, so as to determine whether the vehicle passes through the bumpy region of the road surface.

S 103, in a case where the vehicle passes through the bumpy region of the road surface, determining a location of the bumpy region of the road surface according to the driving state data and the orientation of the vehicle.

In a case where it is determined according to the driving state data of the vehicle that the vehicle is currently driving on the bumpy region of the road surface, a specific location of the bumpy region in a specific road section may be determined according to the driving state data of the vehicle and the direction corresponding to the front of the vehicle, so as to generate prompt information, which is sent to other vehicles or a terminal device of road maintenance personnel through a server, so that relevant personnel can know the situation of the bumpy region of the road surface and take corresponding measures in time.

Optionally, the vehicle-mounted terminal may also send the location of the bumpy region of the road surface to the server, and the server generates corresponding prompt information, which is displayed on an electronic map, or is converted into a voice prompt through a navigation system, so that other vehicles may know the location of the bumpy region of the road surface.

According to the method for detecting a bumpy region of a road surface in the embodiments of the invention, in a case where the vehicle passes through the bumpy region of the road surface, the location of the bumpy region of the road surface is determined by using the driving state data and the orientation of the vehicle, and the bumpy region of the road surface can be accurately located, thereby effectively reminding other vehicles to take measures in time and reminding road maintenance personnel to carry out road maintenance in time.

In the technical solutions of the invention, in addition to determining the location of the bumpy region of the road surface, other information related to the bumpy region of the road surface can also be obtained. Details are shown in the following embodiment.

In an implementation, the method further includes:
in a case where the vehicle passes through the bumpy region of the road surface, and the driving state data includes an acceleration, determining a depth or a height of the bumpy region of the road surface according to a component of the acceleration in a vertical direction.

In actual applications, in a case where the vehicle passes through the bumpy region of the road surface, the acceleration may change in the vertical direction compared with the vehicle driving on a flat road segment. Therefore, after the acceleration of the vehicle is acquired, a component in a z-axis direction of components of the acceleration in an x-axis direction, a y-axis direction, and a z-axis direction, i.e., the component in the vertical direction may be used to indicate a bump amplitude of the vehicle, so as to determine the depth of a recessed region or the height of a raised region of the road surface.

In the embodiments of the invention, in addition to determining the location of the bumpy region of the road surface, the depth or the height of the bumpy region of the road surface can also be determined, so that other vehicles or road maintenance personnel can learn more information about the bumpy region of the road surface and facilitate to take corresponding measures, for example, slowing down or detouring to avoid the bumpy region of the road surface.

Herein, a specific implementation of determining the depth or the height of the bumpy region of the road surface according to the component of the acceleration in the vertical direction is shown in the following embodiment.

In an implementation, the determining the depth or the height of the bumpy region of the road surface according to the component of the acceleration in the vertical direction includes:
determining the depth or the height of the bumpy region of the road surface according to the component of the acceleration in the vertical direction and a first association relationship, wherein the first association relationship is a pre-established association relationship between the component of the acceleration in the vertical direction and the depth or the height of the bumpy region of the road surface.

Herein, the first association relationship may be a corresponding relationship table between the component of the acceleration in the vertical direction and the depth or the height of the bumpy region of the road surface. The corresponding relationship table between the component of the acceleration in the vertical direction and the depth or the height of the bumpy region of the road surface may be pre-established by means of calibration. For example, in a case where the vehicle separately presses through potholes of 1cm, 2cm, 3cm, 4cm, and 5cm, components z₁, z₂, z₃, z₄, and z₅ of the acceleration of the vehicle in the vertical direction are separately recorded, so as to obtain a corresponding relationship table between the component in the vertical direction and the depth of the bumpy region of the road surface. Likewise, in a case where the vehicle separately presses through bulges of 1cm, 2cm, 3cm, 4cm, and 5cm, components z₆, z₇, z₈, z₉, and z₁₀ of the acceleration of the vehicle in the vertical direction are separately recorded, so as to obtain a corresponding relationship table between the component in the vertical direction and the height of the bumpy region of the road surface.

Optionally, in pre-calibration, calibration may be performed separately based on different models and loads of vehicles. In this way, more accurate depth or height information of the bumpy region of the road surface can be obtained by applying the obtained corresponding relationship table to determine the height or the depth of the bumpy region of the road surface.

After the vehicle-mounted terminal acquires a real-time acceleration of the vehicle during driving, the depth or the height of the bumpy region of the road surface can be obtained through the component of the acceleration in the vertical direction and the pre-established corresponding relationship table.

In the embodiments of the invention, the depth or the height of the bumpy region of the road surface is determined according to the component of the acceleration in the vertical direction and the pre-established association relationship between the component of the acceleration in the vertical direction and the depth or the height of the bumpy region of the road surface, so that the relatively accurate depth or height information of the bumpy region of the road surface can be obtained.

A specific implementation of the above S103 is shown in the following embodiment.

According to the invention, the driving state data comprises an attitude angle and a location of the vehicle. Also according to the invention, S103 includes:
S1031 determining, according to the attitude angle, a wheel passing through the bumpy region of the road surface, of the vehicle; and
S1032, determining the location of the bumpy region of the road surface according to the wheel passing through the bumpy region of the road surface, of the vehicle, the location of the vehicle and the orientation of the vehicle.

In actual applications, in a case where different wheels of the vehicle (a front left wheel, a front right wheel, a rear left wheel, and a rear right wheel) pass through the bumpy region of the road surface, attitude angles of the vehicle are usually different. Therefore, the attitude angle of the vehicle may be used to determine which wheel or wheels of the vehicle passes/pass through the bumpy region of the road surface. The relative location of the wheel currently passing through the bumpy region of the road surface and the vehicle can be determined according to the wheel passing through the bumpy region of the road surface, of the vehicle and the orientation of the vehicle, and the location of the vehicle may be the location of a positioning device installed on the vehicle. The location of the wheel currently passing through the bumpy region of the road surface, i.e., the location of the bumpy region of the road surface may be obtained according to the relative location of the wheel currently passing through the bumpy region of the road surface and the vehicle, and the location of the vehicle.

In the embodiments of the invention, the wheel passing through the bumpy region of the road surface, of the vehicle is first determined, and the location of the bumpy region of the road surface is determined according to the wheel passing through the bumpy region of the road surface, of the vehicle, the location of the vehicle, and the orientation of the vehicle, but the location of the bumpy region of the road surface is not determined only according to the location of the vehicle, so that the location of the bumpy region of the road surface determined in this way is more accurate.

Herein, a specific implementation of determining, according to the attitude angle, the wheel passing through the bumpy region of the road surface, of the vehicle is shown in the following embodiment.

In an implementation, S1031 includes:
determining the wheel passing through the bumpy region of the road surface, of the vehicle according to the attitude angle and a second association relationship, wherein the second association relationship is a pre-established association relationship between the attitude angle and the wheel passing through the bumpy region of the road surface, of the vehicle.

Herein, the second association relationship may be a corresponding relationship table between the attitude angle of the vertical and the wheel passing through the bumpy region of the road surface, of the vehicle. The corresponding relationship table between the attitude angle and the wheel passing through the bumpy region of the road surface, of the vehicle may be pre-established by means of calibration. For example, in a case where different wheels of the vehicle pass through a same recessed region of the road surface, attitude angles w₁, w₂, w₃, and w₄ of the vehicle are recorded separately. Likewise, in a case where different wheels of the vehicle pass through a same raised region of the road surface, attitude angles w₅, w₆, w₇, and ws of the vehicle are recorded separately, so as to obtain the corresponding relationship table between the attitude angle and the wheel passing through the bumpy region of the road surface, of the vehicle.

Optionally, in pre-calibration, calibration may be performed separately based on different models and loads of vehicles. In a case where determining the wheel passing through the bumpy region of the road surface through the corresponding relationship table obtained in this way, more accurate information can be obtained.

After the vehicle-mounted terminal acquires the real-time attitude angle of the vehicle during driving, the wheel passing through the bumpy region of the road surface can be determined through the attitude angle and the pre-established corresponding relationship table.

In the embodiments of the invention, the wheel passing through the bumpy region of the road surface, of the vehicle is determined according to the attitude angle and the pre-established association relationship between the attitude angle and the wheel passing through the bumpy region of the road surface, of the vehicle, so that which wheel or wheels passes/pass through the bumpy region of the road surface can be determined relatively accurately, so as to facilitate subsequent determination of the location of the bumpy region of the road surface.

In the technical solutions of the invention, in addition to the depth, the height, and the location of the bumpy region of the road surface, more information can be obtained. Details are shown in the following embodiment.

In an implementation, the method further includes:
collecting visualization information of a road surface in real time;
in a case where the driving state data includes a speed, acquiring a start moment during the vehicle passes through the bumpy region of the road surface;
determining an interval time based on a collection range and the speed;
determining a collection moment based on the start moment and the interval time;
using the visualization information collected at the collection moment as visualization information of the bumpy region of the road surface; and
determining an area of the bumpy region of the road surface based on the visualization information of the bumpy region of the road surface.

In actual applications, the vehicle-mounted terminal may collect the visualization information of the road surface in real time through a collection device installed on the vehicle. Generally, the vehicle passing through the bumpy region of the road surface and the visualization information of the bumpy region of the road surface being collected by the collection device are not synchronized in time, and there may be a time difference, namely, an interval time. The interval time may be determined according to the collection range of the collection device and the speed of the vehicle. In a case where a distance between the bumpy region of the road surface entering the collection range of the collection device and the vehicle passing through the bumpy region of the road surface remains unchanged, the faster the speed of the vehicle, the shorter the interval time. The start moment during the vehicle passes through the bumpy region of the road surface may be determined according to the change of the acceleration and the attitude angle of the vehicle. The collection moment at which the visualization information of the bumpy region of the road surface is collected by the collection device may be determined according to the start moment during the vehicle passes through the bumpy region of the road surface and the interval time, and the area of the bumpy region of the road surface may be determined according to the visualization information at this moment.

In the embodiments of the invention, the area of the bumpy region of the road surface can be acquired, so that other vehicles and related personnel can know more information about the bumpy region of the road surface.

Herein, based on the start moment and the interval time, a specific implementation of determining the visualization information corresponding to the bumpy region of the road surface is shown in the following embodiment.

In an implementation, the determining the collection moment based on the start moment and the interval time includes:
in a case where a collection direction is same as the orientation of the vehicle, backtracking from the start moment by the interval time, to obtain the collection moment.

In actual applications, in a case where the orientation of the collection device is the same as the orientation of the vehicle, the collection device collects the visualization information of the bumpy region of the road surface first, and the vehicle passes through the bumpy region of the road surface later. It may be backtracked from the start moment at which the vehicle passes through the bumpy region of the road surface by the interval time to obtain a moment corresponding to the visualization information of the bumpy region of the road surface, namely, the collection moment. The visualization information collected by the collection device at the collection moment is searched, i.e., the visualization information of the bumpy region of the road surface.

In the embodiment of the invention, in a case where the orientation of the collection device is the same as the orientation of the vehicle, the moment at which the visualization information of the bumpy region of the road surface is collected by the collection device is determined by way of backtracking, and the visualization information of the bumpy region of the road surface may be obtained according to this moment.

In an implementation, the determining the collection moment based on the start moment and the interval time includes:
in a case where a collection direction is opposite to the orientation of the vehicle, delaying from the start moment by the interval time, to obtain the collection moment.

In actual applications, in a case where the orientation of the collection device is opposite to the orientation of the vehicle, the vehicle passes through the bumpy region of the road surface first, and the collection device collects the visualization information of the bumpy region of the road surface later. It may be delayed from the start moment at which the vehicle passes through the bumpy region of the road surface by the interval time to obtain a moment corresponding to the visualization information of the bumpy region of the road surface, namely, the collection moment. The visualization information collected by the collection device at the collection moment is searched, i.e., the visualization information of the bumpy region of the road surface.

In the embodiment of the invention, in a case where the orientation of the collection device is opposite to the orientation of the vehicle, the moment at which the visualization information of the bumpy region of the road surface is collected by the collection device is determined by way of delay, and the visualization information of the bumpy region of the road surface may be obtained according to this moment.

Herein, different types of collection devices may result in different collected visualization information. Details are shown in the following embodiment.

In an implementation, the visualization information is an image or point cloud data.

In actual applications, the collection device may be a camera. Optionally, the vehicle-mounted terminal may collect an image of the road surface through a camera of a driving recorder. In a case where the vehicle passes through the bumpy region of the road surface, the image of the bumpy region of the road surface is collected. The collection device may also be a laser radar. The vehicle-mounted terminal may collect point cloud data of the road surface through the laser radar installed on the top of the vehicle. In a case where the vehicle passes through the bumpy region of the road surface, the point cloud data of the bumpy region of the road surface is collected to obtain a three-dimensional model of the bumpy region of the road surface. The area of the bumpy region of the road surface may be calculated through the image or the point cloud data of the bumpy region of the road surface.

In the embodiments of the invention, different types of visualization information of the bumpy region of the road surface may be collected by different types of collection devices, so as to meet different requirements.

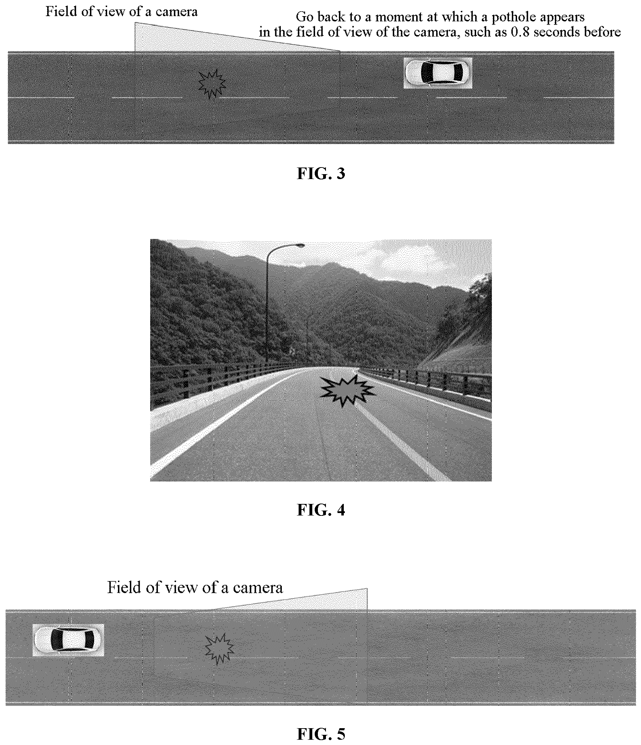

In a specific embodiment, the collection device is a camera, and the orientation of the camera is the same as the orientation of the vehicle. In a case where the vehicle is driving on the road, the vehicle-mounted terminal collects an image of the road surface through the camera in real time. As shown in FIG. 2, the vehicle-mounted terminal detects that the vehicle runs over a pothole, and at this time, the pothole is already outside the field of view of the camera. Therefore, it is necessary to go back 0.8 seconds from a moment at which the vehicle runs over the pothole, to a moment at which the pothole appears in the field of view of the camera, as shown in FIG. 3. The image at this moment is used as an image of a pothole region of the road surface, and the image shown in FIG. 4 is obtained. In a case where the orientation of the camera is opposite to the orientation of the vehicle, the vehicle runs over the pothole first, and then the image of the pothole appears in the field of view of the camera, as shown in FIG. 5. At this time, it is necessary to delay from the moment at which the vehicle runs over the pothole by 0.8 seconds, to obtain the image of the pothole region of the road surface.

In the embodiments of the invention, for how to obtain the driving state data and the orientation of the vehicle, details are shown in the following embodiment.

In an implementation, S101 includes:
acquiring an acceleration and an attitude angle of the vehicle by using an inertial measurement unit;
acquiring the orientation of the vehicle and the location of the vehicle by using a RTK device; and
taking the acceleration, the attitude angle, and the location of the vehicle as driving state data of the vehicle.

Herein, the driving state data of the vehicle may include the acceleration, the attitude angle, and the location of the vehicle. An inertial measurement unit (IMU) may be used to detect and measure the acceleration and a rotational motion, including an accelerometer and an angular velocity meter (also referred to as a gyroscope). Components of the acceleration of the vehicle in the x-axis direction, the y-axis direction, and the z-axis direction may be obtained through the accelerometer, and the attitude angle of the vehicle may be obtained through the angular velocity meter, herein, the attitude angle may include, but is not limited to, a pitch angle, a heading angle, and a roll angle. Optionally, a six-axis inertial measurement unit may be used to acquire the acceleration and the attitude angle of the vehicle.

A Real-Time Kinematic (RTK) device is a measurement device that can obtain a centimeter-level location accuracy in real time, and may acquire the orientation and the location of the vehicle. Optionally, a dual-antenna RTK device may be used to acquire the orientation and the location of the vehicle.

In the embodiments of the invention, the acceleration and the attitude angle of the vehicle are obtained through the inertial measurement unit, and the orientation and the location of the vehicle are obtained through the RTK device. In this way, the obtained data are more accurate, and the information about the bumpy region determined based on these data is more accurate.

In an implementation, the determining, according to the driving state data, whether the vehicle passes through the bumpy region of the road surface includes:
determining, according to the component of the acceleration in the vertical direction and a preset threshold, whether the vehicle passes through the bumpy region of the road surface.

In actual applications, because the component of the acceleration of the vehicle in the vertical direction, i.e., the component in the z-axis direction, may indicate a degree of bumps of the vehicle, it may be determined, through the component of the acceleration in the vertical direction and the preset threshold, whether the vehicle passes through the bumpy region of the road surface. Herein, the preset threshold may be configured by those skilled in the art as required. For example, the preset threshold may be pre-configured according to different situations such as different models and different loads of vehicles.

Optionally, in addition to determining, according to the component of the acceleration in the vertical direction and the preset threshold, whether the vehicle passes through the bumpy region of the road surface, factors such as the attitude angle of the vehicle may also be combined to determine whether the vehicle passes through the bumpy region of the road surface. The invention does not specifically limit this.

In the embodiments of the invention, it is determined, according to the component of the acceleration in the vertical direction and the preset threshold, whether the vehicle passes through the bumpy region of the road surface. This is simple to implement, no additional device is needed, and the cost is low.

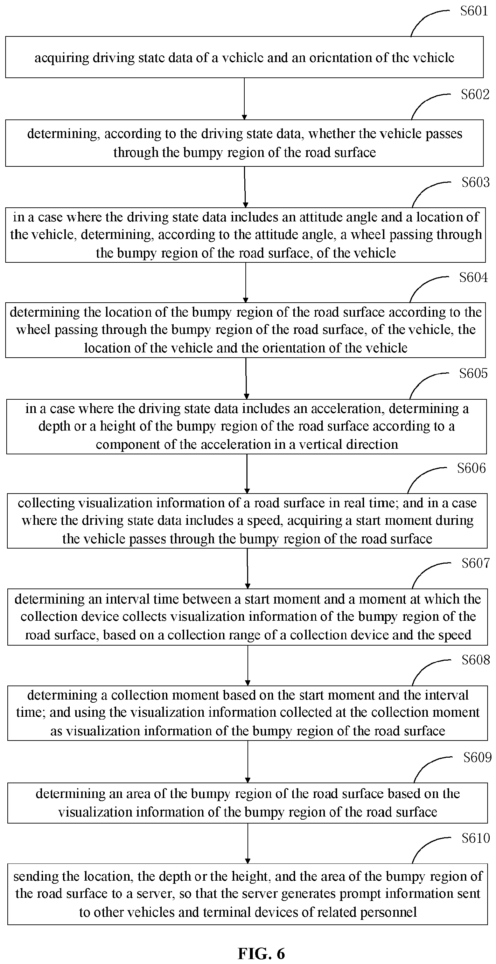

FIG. 6 is a schematic diagram of a method for detecting a bumpy region of a road surface according to an embodiment of the invention. As shown in FIG. 6, the method for detecting a bumpy region of a road surface includes:
S601, acquiring driving state data of a vehicle and an orientation of the vehicle.
S602, determining, according to the driving state data, whether the vehicle passes through the bumpy region of the road surface.
S603 determining, according to the attitude angle, a wheel passing through the bumpy region of the road surface, of the vehicle.
S604, determining the location of the bumpy region of the road surface according to the wheel passing through the bumpy region of the road surface, of the vehicle, the location of the vehicle and the orientation of the vehicle.
S605, in a case where the driving state data includes an acceleration, determining a depth or a height of the bumpy region of the road surface according to a component of the acceleration in a vertical direction.
S606, collecting visualization information of a road surface in real time, and in a case where the driving state data includes a speed, acquiring a start moment during the vehicle passes through the bumpy region of the road surface.
S607, determining an interval time between a start moment and a moment at which the collection device collects visualization information of the bumpy region of the road surface, based on a collection range of a collection device and the speed.
S608, determining a collection moment based on the start moment and the interval time, and using the visualization information collected at the collection moment as the visualization information of the bumpy region of the road surface.
S609, determining an area of the bumpy region of the road surface based on the visualization information of the bumpy region of the road surface.
S610, sending the location, the depth or the height, and the area of the bumpy region of the road surface to a server, so that the server generates prompt information sent to other vehicles and terminal devices of related personnel.

According to the method for detecting a bumpy region of a road surface in the technical solutions of the invention, in a case where the vehicle passes through the bumpy region of the road surface, the location, the depth or the height, and the area of the bumpy region of the road surface are sent to the server, so that the server generates prompt information sent to other vehicles and terminal devices, thereby effectively reminding other vehicles to take measures in time and reminding road maintenance personnel to carry out road maintenance in time.

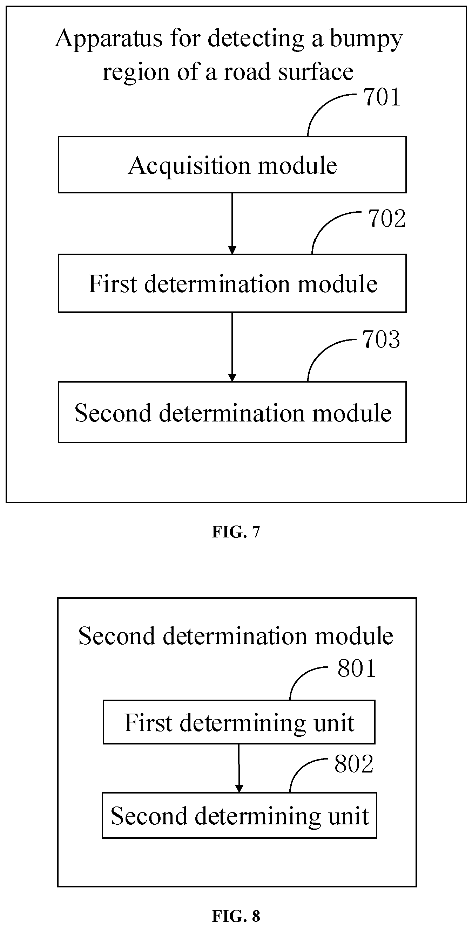

FIG. 7 is a schematic diagram of an apparatus for detecting a bumpy region of a road surface according to an embodiment of the invention. As shown in FIG. 7, the apparatus for detecting a bumpy region of a road surface may include:
an acquisition module 701 configured for acquiring driving state data of a vehicle and an orientation of the vehicle;
a first determination module 702 configured for determining, according to the driving state data, whether the vehicle passes through the bumpy region of the road surface; and
a second determination module 703 configured for: in a case where the vehicle passes through the bumpy region of the road surface, determining a location of the bumpy region of the road surface according to the driving state data and the orientation of the vehicle.

According to the apparatus for detecting a bumpy region of a road surface in the technical solutions of the invention, in a case where the vehicle passes through the bumpy region of the road surface, the location of the bumpy region of the road surface is determined by using the driving state data and the orientation of the vehicle, and the bumpy region of the road surface can be accurately located, thereby effectively reminding other vehicles to take measures in time and reminding road maintenance personnel to carry out road maintenance in time.

In an implementation, the apparatus further includes a third determination module, configured for:
in a case where the vehicle passes through the bumpy region of the road surface, and the driving state data includes an acceleration, determining a depth or a height of the bumpy region of the road surface according to a component of the acceleration in a vertical direction.

In an implementation, the third determination module is specifically configured for:
determining the depth or the height of the bumpy region of the road surface according to the component of the acceleration in the vertical direction and a first association relationship, where the first association relationship is a pre-established association relationship between the component of the acceleration in the vertical direction and the depth or the height of the bumpy region of the road surface.
FIG. 8 is a schematic diagram of a second determination module according to an embodiment of the invention. As shown in FIG. 8, in an implementation, the second determination module 703 includes a first determining unit 801 and a second determining unit 802;
the first determining unit 801 is configured for determining, according to the attitude angle, a wheel passing through the bumpy region of the road surface, of the vehicle; and
the second determining unit 802 is configured for determining the location of the bumpy region of the road surface according to the wheel passing through the bumpy region of the road surface, of the vehicle, the location of the vehicle and the orientation of the vehicle.

In an implementation, the first determining unit 702 is specifically configured for:
determining the wheel passing through the bumpy region of the road surface, of the vehicle according to the attitude angle and a second association relationship, wherein the second association relationship is a pre-established association relationship between the attitude angle and the wheel passing through the bumpy region of the road surface, of the vehicle.

In an implementation, the apparatus further includes an area determination module, configured for:
collecting visualization information of a road surface in real time;
in a case where the driving state data includes a speed, acquiring a start moment during the vehicle passes through the bumpy region of the road surface;
determining an interval time based on a collection range and the speed;
determining a collection moment based on the start moment and the interval time;
using the visualization information collected at the collection moment as visualization information of the bumpy region of the road surface; and
determining an area of the bumpy region of the road surface based on the visualization information of the bumpy region of the road surface.

In an implementation, in a case of determining the collection moment based on the start moment and the interval time, the area determination module is configured for:
in a case where a collection direction is same as the orientation of the vehicle, backtracking from the start moment by the interval time, to obtain the collection moment.

In an implementation, in a case of determining the collection moment based on the start moment and the interval time, the area determination module is configured for:
in a case where a collection direction is opposite to the orientation of the vehicle, delaying from the start moment by the interval time, to obtain the collection moment.

In an implementation, the visualization information is an image or point cloud data.

In an implementation, the acquisition module 701 is specifically configured for:
acquiring an acceleration and an attitude angle of the vehicle by using an inertial measurement unit;
acquiring the orientation of the vehicle and the location of the vehicle by using a RTK device; and
taking the acceleration, the attitude angle, and the location of the vehicle as driving state data of the vehicle.

In an implementation, the first determination module 702 is specifically configured for:
determining, according to the component of the acceleration in the vertical direction and a preset threshold, whether the vehicle passes through the bumpy region of the road surface.

For the function of each unit, module, or submodule in each apparatus according to the embodiments of the invention, reference may be made to corresponding descriptions in the foregoing method embodiments, and details are not described herein again.

In the technical solutions of the invention, acquisition, storage, and application of personal information of a user are in compliance with relevant laws and regulations, and does not violate public order and good customs.

According to embodiments of the invention, the invention also provides an electronic device, a readable storage medium and a computer program product.

According to an embodiment of the invention, the invention further provides a vehicle including at least one of the apparatus, the electronic device, or the non-transitory computer-readable storage medium of any embodiment of the invention.

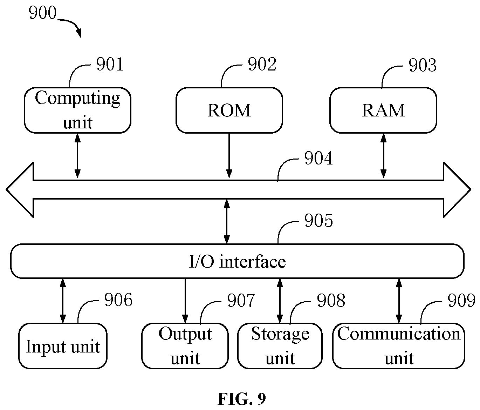

FIG. 9 shows a schematic block diagram of an example electronic device 900 that may be used to implement embodiments of the invention. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as a personal digital assistant, a cellular telephone, a smart phone, a wearable device, and other similar computing devices. The components shown herein, their connections and relationships, and their functions are by way of example only and are not intended to limit the implementations of the invention described and/or claimed herein.

As shown in FIG. 9, the electronic device 900 includes a computing unit 901 that may perform various suitable actions and processes in accordance with computer programs stored in a read only memory (ROM) 902 or computer programs loaded from a storage unit 908 into a random access memory (RAM) 903. In the RAM 903, various programs and data required for the operation of the electronic device 900 may also be stored. The computing unit 901, the ROM 902 and the RAM 903 are connected to each other through a bus 904. An input/output (I/O) interface 905 is also connected to the bus 904.

A plurality of components in the electronic device 900 are connected to the I/O interface 905, including: an input unit 906, such as a keyboard, a mouse, etc.; an output unit 907, such as various types of displays, speakers, etc.; a storage unit 908, such as a magnetic disk, an optical disk, etc.; and a communication unit 909, such as a network card, a modem, a wireless communication transceiver, etc. The communication unit 909 allows the electronic device 900 to exchange information/data with other devices over a computer network, such as the Internet, and/or various telecommunications networks.

The computing unit 901 may be various general purpose and/or special purpose processing assemblies having processing and computing capabilities. Some examples of the computing unit 901 include, but are not limited to, a central processing unit (CPU), a graphics processing unit (GPU), various specialized artificial intelligence (AI) computing chips, various computing units running machine learning model algorithms, a digital signal processor (DSP), and any suitable processor, controller, microcontroller, etc. The computing unit 901 performs various methods and processes described above, such as the method for detecting a bumpy region of a road surface. For example, in some embodiments, the method for detecting a bumpy region of a road surface may be implemented as computer software programs that are physically contained in a machine-readable medium, such as the storage unit 908. In some embodiments, some or all of the computer programs may be loaded into and/or installed on the electronic device 900 via the ROM 902 and/or the communication unit 909. In a case where the computer programs are loaded into the RAM 903 and executed by the computing unit 901, one or more of steps of the above method for detecting a bumpy region of a road surface may be performed. Alternatively, in other embodiments, the computing unit 901 may be configured to perform the method for detecting a bumpy region of a road surface in any other suitable manner (e.g., by means of a firmware).

Various embodiments of the systems and techniques described herein above may be implemented in a digital electronic circuit system, an integrated circuit system, a field programmable gate array (FPGA), an application specific integrated circuit (ASIC), an application specific standard product (ASSP), a system on a chip (SOC), a load programmable logic device (CPLD), a computer hardware, a firmware, a software, and/or a combination thereof. These various implementations may include an implementation in one or more computer programs, which can be executed and/or interpreted on a programmable system including at least one programmable processor; the programmable processor may be a dedicated or general-purpose programmable processor and capable of receiving and transmitting data and instructions from and to a storage system, at least one input device, and at least one output device.

The program codes for implementing the methods of the invention may be written in any combination of one or more programming languages. These program codes may be provided to a processor or controller of a general purpose computer, a special purpose computer, or other programmable data processing apparatus such that the program codes, when executed by the processor or controller, enable the functions/operations specified in the flowchart and/or the block diagram to be performed. The program codes may be executed entirely on a machine, partly on a machine, partly on a machine as a stand-alone software package and partly on a remote machine, or entirely on a remote machine or server.

In the context of the invention, the machine-readable medium may be a tangible medium that may contain or store programs for using by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination thereof. More specific examples of the machine-readable storage medium may include one or more wire-based electrical connection, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination thereof.

In order to provide an interaction with a user, the system and technology described here may be implemented on a computer having: a display device (e. g., a cathode ray tube (CRT) or a liquid crystal display (LCD) monitor) for displaying information to the user; and a keyboard and a pointing device (e. g., a mouse or a trackball), through which the user can provide an input to the computer. Other kinds of devices can also provide an interaction with the user. For example, a feedback provided to the user may be any form of sensory feedback (e.g., visual feedback, auditory feedback, or tactile feedback); and an input from the user may be received in any form, including an acoustic input, a voice input or a tactile input.

The systems and techniques described herein may be implemented in a computing system (e.g., as a data server) that may include a background component, or a computing system (e.g., an application server) that may include a middleware component, or a computing system (e.g., a user computer having a graphical user interface or a web browser through which a user may interact with embodiments of the systems and techniques described herein) that may include a front-end component, or a computing system that may include any combination of such background components, middleware components, or front-end components. The components of the system may be connected to each other through a digital data communication in any form or medium (e.g., a communication network). Examples of the communication network may include a local area network (LAN), a wide area network (WAN), and the Internet.

The computer system may include a client and a server. The client and the server are typically remote from each other and typically interact via the communication network. The relationship of the client and the server is generated by computer programs running on respective computers and having a client-server relationship with each other. The server may be a cloud server, and may also be a server of a distributed system, or a server incorporating a blockchain.

It should be understood that the steps can be reordered, added or deleted using the various flows illustrated above. For example, the steps described in the invention may be performed concurrently, sequentially or in a different order within the scope of the appended claims.

## Claims

1. A method for detecting a bumpy region of a road surface, comprising:
acquiring (S101) driving state data of a vehicle and an orientation of the vehicle;
determining (S102), according to the driving state data, whether the vehicle passes through the bumpy region of the road surface; and
in a case where the vehicle passes through the bumpy region of the road surface, determining (S103) a location of the bumpy region of the road surface according to the driving state data and the orientation of the vehicle,
wherein the driving state data comprises an attitude angle and a location of the vehicle and wherein the determining (S103) the location of the bumpy region of the road surface according to the driving state data and the orientation of the vehicle is **characterized by** the steps of: determining, according to the attitude angle, a wheel passing through the bumpy region of the road surface, of the vehicle; and
determining the location of the bumpy region of the road surface according to the wheel passing through the bumpy region of the road surface, of the vehicle, the location of the vehicle and the orientation of the vehicle,
optionally, wherein the determining, according to the attitude angle, the wheel passing through the bumpy region of the road surface, of the vehicle, comprises:
determining the wheel passing through the bumpy region of the road surface, of the vehicle according to the attitude angle and a second association relationship, wherein the second association relationship is a pre-established association relationship between the attitude angle and the wheel passing through the bumpy region of the road surface, of the vehicle.

2. The method of claim 1, further comprising:
in a case where the vehicle passes through the bumpy region of the road surface, and the driving state data comprises an acceleration, determining a depth or a height of the bumpy region of the road surface according to a component of the acceleration in a vertical direction.

3. The method of claim 2, wherein the determining the depth or the height of the bumpy region of the road surface according to the component of the acceleration in the vertical direction, comprises:
determining the depth or the height of the bumpy region of the road surface according to the component of the acceleration in the vertical direction and a first association relationship, wherein the first association relationship is a pre-established association relationship between the component of the acceleration in the vertical direction and the depth or the height of the bumpy region of the road surface,
optionally, wherein the determining (S102), according to the driving state data, whether the vehicle passes through the bumpy region of the road surface, comprises:
determining, according to the component of the acceleration in the vertical direction and a preset threshold, whether the vehicle passes through the bumpy region of the road surface.

4. The method of any one of claims 1 to 3, further comprising:
collecting visualization information of a road surface in real time;
in a case where the driving state data comprises a speed, acquiring a start moment during the vehicle passes through the bumpy region of the road surface;
determining an interval time based on a collection range and the speed;
determining a collection moment based on the start moment and the interval time;
using the visualization information collected at the collection moment as visualization information of the bumpy region of the road surface; and
determining an area of the bumpy region of the road surface based on the visualization information of the bumpy region of the road surface.

5. The method of claim 4, wherein the determining the collection moment based on the start moment and the interval time, comprises:
in a case where a collection direction is same as the orientation of the vehicle, backtracking from the start moment by the interval time, to obtain the collection moment,
optionally, wherein the determining the collection moment based on the start moment and the interval time, comprises:
in a case where a collection direction is opposite to the orientation of the vehicle, delaying from the start moment by the interval time, to obtain the collection moment,
optionally, wherein the visualization information is an image or point cloud data.

6. The method of any one of claims 1 to 5, wherein the acquiring (S101) the driving state data of the vehicle and the orientation of the vehicle, comprises:
acquiring an acceleration and an attitude angle of the vehicle by using an inertial measurement unit;
acquiring the orientation of the vehicle and the location of the vehicle by using a Real-Time Kinematic RTK device; and
taking the acceleration, the attitude angle, and the location of the vehicle as driving state data of the vehicle.

7. An apparatus for detecting a bumpy region of a road surface, comprising:
an acquisition module (701) configured for acquiring driving state data of a vehicle and an orientation of the vehicle;
a first determination module (702) configured for determining, according to the driving state data, whether the vehicle passes through the bumpy region of the road surface; and
a second determination module (703) configured for: in a case where the vehicle passes through the bumpy region of the road surface, determining a location of the bumpy region of the road surface according to the driving state data and the orientation of the vehicle,
wherein the second determination module (703) comprises a first determining unit (801) and a second determining unit (802);
wherein the driving state data comprises an attitude angle and a location of the vehicle and wherein the first determining unit (801) is configured for determining, according to the attitude angle, a wheel passing through the bumpy region of the road surface, of the vehicle; and
the second determining unit (802) is configured for determining the location of the bumpy region of the road surface according to the wheel passing through the bumpy region of the road surface, of the vehicle, the location of the vehicle and the orientation of the vehicle,
optionally, wherein the first determining unit (801) is specifically configured for:
determining the wheel passing through the bumpy region of the road surface, of the vehicle according to the attitude angle and a second association relationship, wherein the second association relationship is a pre-established association relationship between the attitude angle and the wheel passing through the bumpy region of the road surface, of the vehicle.

8. The apparatus of claim 7, further comprising a third determination module configured for:
in a case where the vehicle passes through the bumpy region of the road surface, and the driving state data comprises an acceleration, determining a depth or a height of the bumpy region of the road surface according to a component of the acceleration in a vertical direction.

9. The apparatus of claim 8, wherein the third determination module is specifically configured for:
determining the depth or the height of the bumpy region of the road surface according to the component of the acceleration in the vertical direction and a first association relationship, wherein the first association relationship is a pre-established association relationship between the component of the acceleration in the vertical direction and the depth or the height of the bumpy region of the road surface,
optionally, wherein the first determination module (702) is specifically configured for:
determining, according to the component of the acceleration in the vertical direction and a preset threshold, whether the vehicle passes through the bumpy region of the road surface.

10. The apparatus of any one of claims 7 to 9, further comprising an area determination module configured for:
collecting visualization information of a road surface in real time;
in a case where the driving state data comprises a speed, acquiring a start moment during the vehicle passes through the bumpy region of the road surface;
determining an interval time based on a collection range and the speed;
determining a collection moment based on the start moment and the interval time;
using the visualization information collected at the collection moment as visualization information of the bumpy region of the road surface; and
determining an area of the bumpy region of the road surface based on the visualization information of the bumpy region of the road surface.

11. The apparatus of claim 10, wherein in a case of determining the collection moment based on the start moment and the interval time, the area determination module is configured for:
in a case where a collection direction is same as the orientation of the vehicle, backtracking from the start moment by the interval time, to obtain the collection moment,
optionally, wherein in a case of determining the collection moment based on the start moment and the interval time, the area determination module is configured for:
in a case where a collection direction is opposite to the orientation of the vehicle, delaying from the start moment by the interval time, to obtain the collection moment,
optionally, wherein the visualization information is an image or point cloud data.

12. The apparatus of any one of claims 7 to 11, wherein the acquisition module (701) is specifically configured for:
acquiring an acceleration and an attitude angle of the vehicle by using an inertial measurement unit;
acquiring the orientation of the vehicle and the location of the vehicle by using a Real-Time Kinematic RTK device; and
taking the acceleration, the attitude angle, and the location of the vehicle as driving state data of the vehicle.

13. A non-transitory computer-readable storage medium storing computer instructions, wherein the computer instructions, when executed by a computer, cause the computer to perform the method of any one of claims 1 to 6.

14. A computer program product comprising a computer program, wherein the computer program, when executed by a processor, implements the method of any one of claims 1 to 6.

15. A vehicle, comprising at least one of the apparatus of any one of claims 7 to 12 or the non-transitory computer-readable storage medium of claim 13.

## Patentansprüche

1. Verfahren zum Feststellen einer unebenen Region einer Straßenoberfläche, umfassend:
Erfassen (S101) von Fahrzustandsdaten eines Fahrzeugs und einer Orientierung des Fahrzeugs;
Bestimmen (S102), nach den Fahrzustandsdaten, ob das Fahrzeug die unebene Region der Straßenoberfläche durchfährt; und
in einem Fall, in dem das Fahrzeug die unebene Region der Straßenoberfläche durchfährt, Bestimmen (S103) einer Stelle der unebenen Region der Straßenoberfläche nach den Fahrzustandsdaten und der Orientierung des Fahrzeugs,
wobei die Fahrzustandsdaten einen Lagewinkel und eine Stelle des Fahrzeugs umfassen und wobei das Bestimmen (S103) der Stelle der unebenen Region der Straßenoberfläche nach den Fahrzustandsdaten und der Orientierung des Fahrzeugs durch die folgenden Schritte gekennzeichnet ist:
Bestimmen, nach dem Lagewinkel, eines die unebene Region der Straßenoberfläche durchfahrenden Rades des Fahrzeugs; und
Bestimmen der Stelle der unebenen Region der Straßenoberfläche nach dem Durchfahren der unebenen Region der Straßenoberfläche durch das Rad des Fahrzeugs, der Stelle des Fahrzeugs und der Orientierung des Fahrzeugs,
optional, wobei das Bestimmen, nach dem Lagewinkel, dass das Rad die unebene Region der Straßenoberfläche des Fahrzeugs durchfährt, Folgendes umfasst:
Bestimmen des die unebene Region der Straßenoberfläche durchfahrenden Rades des Fahrzeugs nach dem Lagewinkel und einer zweiten Zuordnungsbeziehung, wobei die zweite Zuordnungsbeziehung eine vorher festgelegte Zuordnungsbeziehung zwischen dem Lagewinkel und dem die unebene Region der Straßenoberfläche durchfahrenden Rad des Fahrzeugs ist.

2. Verfahren nach Anspruch 1, ferner umfassend:
in einem Fall, in dem das Fahrzeug die unebene Region der Straßenoberfläche durchfährt und die Fahrzustandsdaten eine Beschleunigung umfassen, Bestimmen einer Tiefe oder einer Höhe der unebenen Region der Straßenoberfläche nach einer Komponente der Beschleunigung in einer vertikalen Richtung.

3. Verfahren nach Anspruch 2, wobei das Bestimmen der Tiefe oder der Höhe der unebenen Region der Straßenoberfläche nach der Komponente der Beschleunigung in vertikaler Richtung Folgendes umfasst:
Bestimmen der Tiefe oder der Höhe der unebenen Region der Straßenoberfläche nach der Komponente der Beschleunigung in der vertikalen Richtung und einer ersten Zuordnungsbeziehung, wobei die erste Zuordnungsbeziehung eine vorher festgelegte Zuordnungsbeziehung zwischen der Komponente der Beschleunigung in der vertikalen Richtung und der Tiefe oder der Höhe der unebenen Region der Straßenoberfläche ist,
optional, wobei das Bestimmen (S102), nach den Fahrzustandsdaten, ob das Fahrzeug die unebene Region der Straßenoberfläche durchfährt, Folgendes umfasst:
Bestimmen, nach der Komponente der Beschleunigung in der vertikalen Richtung und einem vorgegebenen Schwellenwert, ob das Fahrzeug die unebene Region der Straßenoberfläche durchfährt.

4. Verfahren nach einem der Ansprüche 1 bis 3, ferner umfassend:
Sammeln von Visualisierungsinformationen über eine Straßenoberfläche in Echtzeit;
in einem Fall, in dem die Fahrzustandsdaten eine Geschwindigkeit umfassen, Erfassen eines Startzeitpunkts, während das Fahrzeug die unebene Region der Straßenoberfläche durchfährt;
Bestimmen einer Intervallzeit basierend auf einem Sammlungsbereich und der Geschwindigkeit;
Bestimmen eines Zeitpunkts der Sammlung basierend auf dem Startzeitpunkt und der Intervallzeit;
Verwenden der zum Zeitpunkt der Sammlung gesammelten Visualisierungsinformationen als Visualisierungsinformationen der unebenen Region der Straßenoberfläche; und
Bestimmen eines Bereichs der unebenen Region der Straßenoberfläche basierend auf der Visualisierungsinformation der unebenen Region der Straßenoberfläche.

5. Verfahren nach Anspruch 4, wobei das Bestimmen des Zeitpunkts der Sammlung basierend auf dem Startzeitpunkt und der Intervallzeit, Folgendes umfasst:
in einem Fall, in dem die Richtung der Sammlung mit der Orientierung des Fahrzeugs übereinstimmt, Rückverfolgen vom Startzeitpunkt um die Intervallzeit, um den Zeitpunkt der Sammlung zu ermitteln,
optional, wobei das Bestimmen des Zeitpunkts der Sammlung basierend auf dem Startzeitpunkt und der Intervallzeit, Folgendes umfasst:
in einem Fall, in dem die Richtung der Sammlung der Orientierung des Fahrzeugs entgegengesetzt ist, Verzögern des Startzeitpunkts um die Intervallzeit, um den Zeitpunkt der Sammlung zu ermitteln,
optional, wobei die Visualisierungsinformationen Bild- oder Punkt-Coud-Daten sind.

6. Verfahren nach einem der Ansprüche 1 bis 5, wobei das Erfassen (S101) der Fahrzustandsdaten des Fahrzeugs und der Orientierung des Fahrzeugs Folgendes umfasst:
Erfassen einer Beschleunigung und eines Lagewinkels des Fahrzeugs unter Verwendung einer inertialen Messeinheit;
Erfassen der Orientierung des Fahrzeugs und der Stelle, an der sich das Fahrzeug befindet, unter Verwendung einer kinematischen Echtzeit-RTK-Vorrichtung; und
Nehmen der Beschleunigung, des Lagewinkels und der Stelle des Fahrzeugs als Fahrzustandsdaten des Fahrzeugs.

7. Gerät zum Feststellen einer unebenen Region einer Straßenoberfläche, umfassend:
ein Erfassungsmodul (701), das für das Erfassen von Fahrzustandsdaten eines Fahrzeugs und einer Orientierung des Fahrzeugs konfiguriert ist;
ein erstes Bestimmungsmodul (702), das konfiguriert ist, um nach den Fahrzustandsdaten zu bestimmen, ob das Fahrzeug die unebene Region der Straßenoberfläche durchfährt; und
ein zweites Bestimmungsmodul (703), konfiguriert zum: in einem Fall, in dem das Fahrzeug die unebene Region der Straßenoberfläche durchfährt, Bestimmen einer Stelle der unebenen Region der Straßenoberfläche nach den Fahrzustandsdaten und der Orientierung des Fahrzeugs,
wobei das zweite Bestimmungsmodul (703) eine erste Bestimmungseinheit (801) und eine zweite Bestimmungseinheit (802) umfasst;
wobei die Fahrzustandsdaten einen Lagewinkel und eine Stelle des Fahrzeugs umfassen und wobei die erste Bestimmungseinheit (801) so konfiguriert ist, dass sie nach dem Lagewinkel bestimmt, dass ein Rad des Fahrzeugs die unebene Region der Straßenoberfläche durchfährt; und
die zweite Bestimmungseinheit (802) konfiguriert ist, um die Stelle der unebenen Region der Straßenoberfläche nach dem Durchfahren des Rads durch die unebene Region der Straßenoberfläche, des Fahrzeugs, der Stelle des Fahrzeugs und der Orientierung des Fahrzeugs zu bestimmen,
optional, wobei die erste Bestimmungseinheit (801) speziell konfiguriert ist zum:
Bestimmen des die unebene Region der Straßenoberfläche durchfahrenden Rades des Fahrzeugs nach dem Lagewinkel und einer zweiten Zuordnungsbeziehung, wobei die zweite Zuordnungsbeziehung eine vorher festgelegte Zuordnungsbeziehung zwischen dem Lagewinkel und dem die unebene Region der Straßenoberfläche durchfahrenden Rad des Fahrzeugs ist.

8. Gerät nach Anspruch 7, ferner umfassend ein drittes Bestimmungsmodul, konfiguriert zum:
in einem Fall, in dem das Fahrzeug die unebene Region der Straßenoberfläche durchfährt und die Fahrzustandsdaten eine Beschleunigung umfassen, Bestimmen einer Tiefe oder einer Höhe der unebenen Region der Straßenoberfläche nach einer Komponente der Beschleunigung in einer vertikalen Richtung.

9. Gerät nach Anspruch 8, wobei das dritte Bestimmungsmodul speziell konfiguriert ist zum:
Bestimmen der Tiefe oder der Höhe der unebenen Region der Straßenoberfläche nach der Komponente der Beschleunigung in der vertikalen Richtung und einer ersten Zuordnungsbeziehung, wobei die erste Zuordnungsbeziehung eine vorher festgelegte Zuordnungsbeziehung zwischen der Komponente der Beschleunigung in der vertikalen Richtung und der Tiefe oder der Höhe der unebenen Region der Straßenoberfläche ist,
optional, wobei das erste Bestimmungsmodul (702) speziell konfiguriert ist zum:
Bestimmen, nach der Komponente der Beschleunigung in der vertikalen Richtung und einem vorgegebenen Schwellenwert, ob das Fahrzeug die unebene Region der Straßenoberfläche durchfährt.

10. Gerät nach einem der Ansprüche 7 bis 9, das ferner ein Bereichbestimmungsmodul umfasst, das konfiguriert ist zum:
Sammeln von Visualisierungsinformationen über eine Straßenoberfläche in Echtzeit;
in einem Fall, in dem die Fahrzustandsdaten eine Geschwindigkeit umfassen, Erfassen eines Startzeitpunkts, während das Fahrzeug die unebene Region der Straßenoberfläche durchfährt;
Bestimmen einer Intervallzeit basierend auf einem Sammlungsbereich und der Geschwindigkeit;
Bestimmen eines Zeitpunkts der Sammlung basierend auf dem Startzeitpunkt und der Intervallzeit;
Verwenden der zum Zeitpunkt der Sammlung gesammelten Visualisierungsinformationen als Visualisierungsinformationen der unebenen Region der Straßenoberfläche; und
Bestimmen eines Bereichs der unebenen Region der Straßenoberfläche basierend auf der Visualisierungsinformation der unebenen Region der Straßenoberfläche.

11. Gerät nach Anspruch 10, wobei das Bereichbestimmungsmodul im Falle des Bestimmens des Zeitpunkts der Sammlung basierend auf dem Startzeitpunkt und der Intervallzeit konfiguriert ist zum:
in einem Fall, in dem die Richtung der Sammlung mit der Orientierung des Fahrzeugs übereinstimmt, Rückverfolgen vom Startzeitpunkt um die Intervallzeit, um den Zeitpunkt der Sammlung zu ermitteln,
optional, wobei das Bereichbestimmungsmodul im Falle des Bestimmens des Zeitpunkts der Sammlung basierend auf dem Startzeitpunkt und der Intervallzeit konfiguriert ist zum:
in einem Fall, in dem die Richtung der Sammlung der Orientierung des Fahrzeugs entgegengesetzt ist, Verzögern des Startzeitpunkts um die Intervallzeit, um den Zeitpunkt der Sammlung zu ermitteln,
optional, wobei die Visualisierungsinformationen Bild- oder Punkt-Coud-Daten sind.

12. Gerät nach einem der Ansprüche 7 bis 11, wobei das Erfassungsmodul (701) speziell konfiguriert ist zum:
Erfassen einer Beschleunigung und eines Lagewinkels des Fahrzeugs unter Verwendung einer inertialen Messeinheit;
Erfassen der Orientierung des Fahrzeugs und der Stelle, an der sich das Fahrzeug befindet, unter Verwendung einer kinematischen Echtzeit-RTK-Vorrichtung; und
Nehmen der Beschleunigung, des Lagewinkels und der Stelle des Fahrzeugs als Fahrzustandsdaten des Fahrzeugs.

13. Nicht-übertragbares computerlesbares Speichermedium, das Computeranweisungen speichert, wobei die Computeranweisungen, wenn sie von einem Computer ausgeführt werden, den Computer veranlassen, das Verfahren nach einem der Ansprüche 1 bis 6 auszuführen.

14. Computerprogrammprodukt, umfassend ein Computerprogramm, wobei das Computerprogramm, wenn es von einem Prozessor ausgeführt wird, das Verfahren nach einem der Ansprüche 1 bis 6 implementiert.

15. Fahrzeug, umfassend mindestens eines der Geräte nach einem der Ansprüche 7 bis 12 oder das nicht-übertragbare computerlesbare Speichermedium nach Anspruch 13.

## Revendications

1. Méthode de détection d'une zone bosselée de la surface d'une route, comprenant : l'acquisition (S101) de données relatives à l'état de conduite d'un véhicule et à l'orientation du véhicule ;
déterminer (5102), en fonction des données relatives à l'état de conduite, si le véhicule traverse la zone bosselée de la surface de la route ; et
dans le cas où le véhicule traverse la zone bosselée de la chaussée, déterminer (S103) l'emplacement de la zone bosselée de la chaussée en fonction des données relatives à l'état de conduite et de l'orientation du véhicule,
dans lequel les données relatives à l'état de conduite comprennent un angle d'attitude et une localisation du véhicule et dans lequel la détermination (S103) de la localisation de la région bosselée de la surface de la route
en fonction des données relatives à l'état de la conduite et l'orientation du véhicule est **caractérisée par** les données suivantes
étapes de :
déterminer, en fonction de l'angle dattitude, une roue du véhicule qui traverse la zone bosselée de la surface de la route ; et
déterminer l'emplacement de la zone bosselée de la surface de la route en fonction du passage de la roue dans la zone bosselée de la surface de la route, du véhicule, de l'emplacement du véhicule et de l'orientation du véhicule,
éventuellement, dans lequel la détermination, en fonction de l'angle d'attitude, de la roue passant dans la zone bosselée de la surface de la route, du véhicule, comprend :
déterminer le passage de la roue dans la zone bosselée de la chaussée du véhicule en fonction de l'angle d'attitude et d'une deuxième relation d'association, la deuxième relation d'association étant une relation d'association préétablie entre l'angle d'attitude et le passage de la roue dans la zone bosselée de la chaussée du véhicule.

2. La méthode de la revendication 1, comprenant en outre :
dans le cas où le véhicule traverse la zone bosselée de la chaussée et que les données relatives à l'état de conduite comprennent une accélération, déterminer la profondeur ou la hauteur de la zone bosselée de la chaussée en fonction d'une composante de l'accélération dans une direction verticale.

3. la méthode de la revendication 2, dans laquelle la détermination de la profondeur ou de la hauteur de la zone bosselée de la surface de la route en fonction de la composante de l'accélération dans la direction verticale, comprend :
déterminer la profondeur ou la hauteur de la zone bosselée de la chaussée en fonction de la composante de l'accélération dans la direction verticale et d'une première relation d'association, la première relation d'association étant une relation d'association préétablie entre la composante de l'accélération dans la direction verticale et la profondeur ou la hauteur de la zone bosselée de la chaussée,
éventuellement, dans lequel la détermination (5102), en fonction des données relatives à l'état de conduite, de la traversée par le véhicule de la zone bosselée de la surface de la route, comprend :
déterminer, en fonction de la composante de l'accélération dans la direction verticale, et un seuil prédéfini, si le véhicule traverse la zone bosselée de la chaussée.

4. La méthode de l'une des revendications 1 à 3, comprenant en outre :
la collecte d'informations de visualisation d'un revêtement routier en temps réel ;
dans le cas où les données relatives à l'état de conduite comprennent une vitesse, l'acquisition d'un moment de départ pendant que le véhicule traverse la zone bosselée de la chaussée ;
déterminer une durée d'intervalle sur la base d'une plage de collecte et de la vitesse ;
déterminer un moment de collecte sur la base du moment de départ et de l'intervalle de temps ;
utiliser les informations de visualisation recueillies au moment de la collecte en tant qu'informations de visualisation de la région bosselée de la surface de la route ; et
déterminer une zone de la région bosselée de la surface de la route sur la base des informations de visualisation de la région bosselée de la surface de la route.

5. La méthode de la revendication 4, dans laquelle la détermination du moment de la collecte en fonction du moment de départ et de l'intervalle de temps, comprend :
dans le cas où la direction de collecte est identique à l'orientation du véhicule,
en remontant de l'instant de départ à la durée de l'intervalle, pour obtenir l'instant de collecte,
éventuellement, dans lequel la détermination du moment de la collecte sur la base du moment de départ et de l'intervalle de temps, comprend :
dans le cas où la direction de collecte est opposée à l'orientation du véhicule, retarder l'instant de départ de la durée de l'intervalle, afin d'obtenir l'instant de collecte,
éventuellement, dans lequel les informations de visualisation sont une image ou des données de nuage de points.

6. Le procédé de l'une des revendications 1 à 5, dans lequel l'acquisition (S101) des données relatives à l'état de conduite du véhicule et à l'orientation du véhicule comprend :
l'acquisition d'une accélération et d'un angle d'attitude du véhicule à l'aide d'un système d'inertie unité de mesure ;
acquisition de l'orientation et de la localisation du véhicule à l'aide d'un dispositif RTK (Real-Time Kinematic) ; et
en considérant l'accélération, l'angle d'attitude et la localisation du véhicule comme des données relatives à l'état de conduite du véhicule.

7. Un appareil pour détecter une zone bosselée d'une surface routière, comprenant :
un module d'acquisition (701) configuré pour acquérir des données sur l'état de conduite d'un véhicule et sur l'orientation du véhicule ;
un premier module de détermination (702) configuré pour déterminer, en fonction de la conduite données d'état, si le véhicule traverse la zone bosselée de la surface de la route ; et
un deuxième module de détermination (703) configuré pour : dans le cas où le véhicule traverse la zone bosselée de la chaussée, déterminer un emplacement de la zone bosselée de la chaussée en fonction des données relatives à l'état de conduite et de l'orientation du véhicule,
dans lequel le deuxième module de détermination (703) comprend une première unité de détermination (801)
et une deuxième unité de détermination (802) ;
dans lequel les données relatives à l'état de conduite comprennent un angle d'attitude et une position de l'appareil.
véhicule et dans lequel la première unité de détermination (801) est configurée pour déterminer, en fonction de l'attitude
une roue qui traverse la zone bosselée de la surface de la route, du véhicule ; et
la deuxième unité de détermination (802) est configurée pour déterminer l'emplacement de la zone bosselée de la surface de la route en fonction du passage de la roue dans la zone bosselée de la surface de la route, du véhicule, de l'emplacement du véhicule et de l'orientation du véhicule,
éventuellement, dans laquelle la première unité de détermination (801) est spécifiquement configurée pour :
déterminer le passage de la roue dans la zone bosselée de la chaussée du véhicule en fonction de l'angle d'attitude et d'une deuxième relation d'association, la deuxième relation d'association étant une relation d'association préétablie entre l'angle d'attitude et le passage de la roue dans la zone bosselée de la chaussée du véhicule.

8. L'appareil de la revendication 7, comprenant en outre un troisième module de détermination configuré pour :
dans le cas où le véhicule traverse la zone bosselée de la chaussée et que les données relatives à l'état de conduite comprennent une accélération, déterminer la profondeur ou la hauteur de la zone bosselée de la chaussée en fonction d'une composante de l'accélération dans une direction verticale.

9. L'appareil de la revendication 8, dans lequel le troisième module de détermination est spécifiquement configuré pour :
déterminer la profondeur ou la hauteur de la zone bosselée de la surface de la route en fonction des éléments suivants
à la composante de l'accélération dans la direction verticale et une première relation d'association,
la première relation d'association est une relation d'association préétablie entre la composante de l'accélération dans la direction verticale et la profondeur ou la hauteur de la zone bosselée de la surface de la route,
éventuellement, dans lequel le premier module de détermination (702) est spécifiquement configuré pour : déterminer, en fonction de la composante de l'accélération dans la direction verticale et de la composante de l'accélération dans la direction horizontale, la valeur de l'accélération dans la direction verticale.
un seuil prédéfini, si le véhicule traverse la zone bosselée de la chaussée.

10. L'appareil de l'une des revendications 7 à 9, comprenant en outre un module de détermination de zone configuré pour :
la collecte d'informations de visualisation d'un revêtement routier en temps réel ;
dans le cas où les données relatives à l'état de conduite comprennent une vitesse, l'acquisition d'un moment de départ pendant la durée de la conduite.
le véhicule traverse la zone bosselée de la chaussée ;
déterminer une durée d'intervalle sur la base d'une plage de collecte et de la vitesse ; déterminer un moment de collecte sur la base du moment de départ et de la durée d'intervalle ;
utiliser les informations de visualisation recueillies au moment de la collecte comme visualisation
des informations sur la zone bosselée de la surface de la route ; et
déterminer une zone de la région bosselée de la surface de la route sur la base des informations de visualisation de la région bosselée de la surface de la route.

11. L'appareil de la revendication 10, dans lequel, lors de la détermination du moment de la collecte sur la base du moment de départ et de l'intervalle de temps, le module de détermination de la zone est configuré pour :
dans le cas où la direction de la collecte est identique à l'orientation du véhicule, en remontant à partir de l'instant de départ en fonction de la durée de l'intervalle, pour obtenir l'instant de la collecte,
éventuellement, dans le cas où la détermination du moment de la collecte est basée sur le début
et la durée de l'intervalle, le module de détermination de la zone est configuré pour :
dans le cas où la direction de collecte est opposée à l'orientation du véhicule, retarder l'instant de départ de la durée de l'intervalle, afin d'obtenir l'instant de collecte,
éventuellement, dans lequel les informations de visualisation sont une image ou des données de nuage de points.

12. L'appareil de l'une des revendications 7 à 11, dans lequel le module d'acquisition (701) est spécifiquement configuré pour :
l'acquisition d'une accélération et d'un angle d'attitude du véhicule à l'aide d'une unité de mesure inertielle ;
l'acquisition de l'orientation et de la localisation du véhicule à l'aide d'un système d'acquisition de données en temps réel.
Dispositif RTK (Time Kinematic) ; et
en considérant l'accélération, l'angle d'attitude et la localisation du véhicule comme des données relatives à l'état de conduite du véhicule.

13. Un support de stockage non transitoire lisible par ordinateur stockant des instructions informatiques, dans lequel les instructions informatiques, lorsqu'elles sont exécutées par un ordinateur, amènent ce dernier à mettre en oeuvre la méthode décrite dans l'une des revendications 1 à 6.

14. Produit de programme d'ordinateur comprenant un programme d'ordinateur, dans lequel le programme informatique, lorsqu'il est exécuté par un processeur, met en oeuvre la méthode de l'une des revendications 1 à 6.

15. Véhicule comprenant au moins un des appareils décrits dans l'une des sections suivantes revendications 7 à 12 ou le support de stockage non transitoire lisible par ordinateur de la revendication 13.
